# EUROPÄISCHE PATENTSCHRIFT

(11) **EP 3 803 146 B1**
(45) Veröffentlichungstag und Bekanntmachung des Hinweises auf die Patenterteilung: **15.03.2023**
(21) Anmeldenummer: 19730668.1
(22) Anmeldetag: 22.05.2019
(51) Int. Cl.: F16D 21/06

(54) **KUPPLUNGSEINRICHTUNG FÜR EINEN KRAFTFAHRZEUGANTRIEBSSTRANG; GETRIEBEEINHEIT SOWIE ANTRIEBSSTRANG**
CLUTCH DEVICE FOR A MOTOR VEHICLE POWERTRAIN, TRANSMISSION UNIT, AND POWERTRAIN
ENSEMBLE EMBRAYAGE CONÇU POUR UNE CHAÎNE CINÉMATIQUE DE VÉHICULE AUTOMOBILE, ENSEMBLE TRANSMISSION ET CHAÎNE CINÉMATIQUE

(30) Priorität: 04.06.2018 DE 102018113221; 10.04.2019 DE 102019109424
(43) Veröffentlichungstag der Anmeldung: 14.04.2021
(73) Patentinhaber: Schaeffler Technologies AG & Co. KG, 91074 Herzogenaurach (DE)
(72) Erfinder: AGNER, Ivo, 77815 Bühl (DE); KELLER, Aurelie, 67850 Herrlisheim (FR); HURLE, Thomas, 77830 Bühlertal (DE)
(86) Internationale Anmeldenummer: PCT/DE2019/100455
(87) Internationale Veröffentlichungsnummer: WO 2019/233519

(56) Entgegenhaltungen:
- WO-A1-2018/077332
- CN-U- 207 128 607

## Beschreibung

Die Erfindung betrifft eine Kupplungseinrichtung für einen Kraftfahrzeugantriebsstrang, vorzugsweise einen hybriden Antriebsstrang eines Kraftfahrzeuges, wie eines Pkws, Lkws, Busses oder sonstigen Nutzfahrzeuges. Zudem betrifft die Erfindung eine Getriebeeinheit mit einem Getriebe sowie mit dieser Kupplungseinrichtung. Auch betrifft die Erfindung einen mit dieser Getriebeeinheit ausgestatteten Antriebsstrang.

Aus dem Stand der Technik sind allgemein Automatikgetriebe für Kraftfahrzeuge bekannt. Auch sind bereits so genannte P3-E-Maschinen bekannt, die an einem Getriebeausgang des Automatikgetriebes angeordnet sind und mittels einer Trennkupplung zu- und abkoppelbar sind.

Hybride Antriebsstränge in P2-Bauweise mit einer Trennkupplung zwischen einer Verbrennungskraftmaschine und einer E-Maschine sind aus der CN 207128607 U und der WO 2018/077332 bekannt. Hier befindet sich zusätzlich zur Trennkupplung eine Doppelkupplung zwischen der E-Maschine und dem Getriebeeingang.

Als Nachteil bei den aus dem Stand der Technik bekannten Ausführungen hat es sich jedoch herausgestellt, dass unter bestimmten Betriebszuständen relativ hohe Axialkräfte auf die einzelnen Komponenten der Antriebsstrangeinheit wirken, die bspw. durch eine Betätigung der Trennkupplung verursacht werden. Auch sind die bekannten Systeme häufig relativ großbauend.

Es ist daher die Aufgabe der vorliegenden Erfindung, die aus dem Stand der Technik bekannten Nachteile zu beheben und insbesondere eine bauraumsparende Antriebsstrangeinheit zur Verfügung zu stellen, die einen derart robusteren Aufbau aufweist, dass im Betrieb entstehende Axialkräfte gleichmäßig abgestützt werden.

Dies wird erfindungsgemäß durch den Gegenstand des Anspruchs 1 gelöst. Demnach ist eine Kupplungseinrichtung für einen Kraftfahrzeugantriebsstrang umgesetzt. Die Kupplungseinrichtung ist mit einer zum drehfesten Anbringen an einem Ausgang eines Getriebes vorbereiteten Eingangswelle, einer an der Eingangswelle angeordneten Kupplung, wobei ein erster Kupplungsbestandteil der Kupplung direkt mit der Eingangswelle drehfest verbunden und an der Eingangswelle axial abgestützt ist und ein zweiter Kupplungsbestandteil der Kupplung zum drehfesten Koppeln an einem weiteren Bestandteil ausgestattet ist, sowie mit einer mit der Kupplung wirkverbundenen Betätigungseinheit ausgestattet. Die Betätigungseinheit weist weiterhin ein verschiebbares Betätigungslager auf, welches Betätigungslager derart mit einem mit dem ersten Kupplungsbestandteil drehfest verbundenen Betätigungskrafteinleitmechanismus zusammenwirkt, dass eine die Kupplung von ihrer geöffneten Stellung in ihre geschlossene Stellung verstellende Betätigungskraft über einen (ersten) Träger des ersten Kupplungsbestandteils direkt in die Eingangswelle eingeleitet wird und von der Eingangswelle über ein Stützlager an einer Gehäusewand abgestützt ist.

Durch diese geschickte Ausbildung der Kupplungseinrichtung ist es möglich, im Betrieb entstehende Axialkräfte möglichst robust unmittelbar an der Eingangswelle abzustützen und nicht auf den zweiten Kupplungsbestandteil übergehen zu lassen. Die Lagerung des zweiten Kupplungsbestandteils bzw. die Dimensionierung des zweiten Kupplungsbestandteils kann somit deutlich kompakter gewählt werden. Zudem ist eine Vormontage einer Einheit aus der Kupplung und der Betätigungseinheit zu einem einheitlichen Modul vereinfacht.

Weitere vorteilhafte Ausführungen sind mit den Unteransprüchen beansprucht und nachfolgend näher erläutert.

Demnach ist es insbesondere von Vorteil, wenn zwei Kupplungen vorhanden sind, mit denen jeweils eine Betätigungseinheit zusammen wirkt. Dadurch sind zwei Kupplungen besonders bauraumsparend betätigt.

In diesem Zusammenhang ist es des Weiteren vorteilhaft und erfindungsgemäß zumindest in einer ersten Alternative vorgesehen, dass eine erste Kupplung als eine Trennkupplung zwischen der Eingangswelle und einer elektrischen Maschine, d. h. einem Rotor der elektrischen Maschine, wirkend eingesetzt ist. Dadurch lassen sich die auf den Rotor einwirkenden Axialkräfte geschickt reduzieren bzw. vermeiden.

Auch ist es zweckmäßig, wenn der zweite Kupplungsbestandteil der ersten Kupplung über eine Zahnradstufe oder einen Endloszugmitteltrieb mit einem Rotor der elektrischen Maschine gekoppelt ist. Der zweite Kupplungsbestandteil weist dabei besonders bevorzugt eine Verzahnung auf, die sich in Zahneingriff mit einem drehfest mit dem Rotor verbundenen Zahnrad befindet. Dadurch lassen sich die Lagerungen des Zahnrades sowie des Rotors besonders geschickt klein dimensionieren.

Des Weiteren ist es in einer erfindungsgemäßen zweiten Alternative oder zusätzlich vorgesehen, dass eine zweite Kupplung zwischen der Eingangswelle und einer zur drehfesten Verbindung mit einer Kardanwelle vorbereiteten Ausgangswelle wirkend eingesetzt ist.

Diesbezüglich ist es weiterhin zweckmäßig, wenn der zweite Kupplungsbestandteil der zweiten Kupplung direkt / unmittelbar mit der Ausgangswelle drehfest verbunden ist. Dadurch wird die Kupplung besonders geschickt als ein Koppelelement zum Umschalten in einen Allradantrieb des Kraftfahrzeuges eingesetzt.

Hinsichtlich der Anordnung der Betätigungseinheiten hat es sich zudem als vorteilhaft herausgestellt, wenn diese jeweils auf einander axial abgewandten Seiten der Gehäusewand angeordnet sind. Dadurch werden diese besonders geschickt und kompakt in axialer Richtung verbaut.

Für die Abstützung ist es auch von Vorteil, wenn die zumindest eine Betätigungseinheit derart ausgebildet und angeordnet ist, dass die Betätigungskraft über das Betätigungslager, ein Verstellelement, wie ein Hebelelement oder einen Drucktopf, ein (optionales) Stellglied, einen Gegenstützbereich, den Träger, die Eingangswelle, das Stützlager und die Gehäusewand abgestützt ist. Dadurch wird vorteilhafterweise keine Betätigungskraft den zweiten Kupplungsbestandteil auf eine bevorzugt eingesetzte Zahnradstufe seitens der elektrischen Maschine oder eine Kardanwelle geleitet.

Auch ist es von Vorteil, wenn die zumindest eine Betätigungseinheit einen als Hebelaktor ausgebildeten Axialkraftaktor aufweist. Der Aufbau des Hebelaktors ist zudem besonders kompakt, wenn dieser zumindest einen Elektromotor zum Antrieb eines Hebelmechanismus aufweist.

Des Weiteren betrifft die Erfindung eine Getriebeeinheit für ein Hybridfahrzeug, mit der erfindungsgemäßen Kupplungseinrichtung nach einem der zuvor beschriebenen Ausführungen und mit einem mit der Eingangswelle der Kupplungseinrichtung verbundenen Getriebe.

Auch betrifft die Erfindung einen Antriebsstrang für ein Hybridfahrzeug, mit der Getriebeeinheit und einem mit einer Ausgangswelle der Kupplungseinrichtung drehfest gekoppelten Differentialgetriebe. Dadurch wird ein besonders leistungsfähiger Antriebsstrang zur Verfügung gestellt.

Hinsichtlich des Antriebsstranges ist es auch von Vorteil, wenn die Ausgangswelle der Antriebsstrangeinheit drehfest mit einer zu einem Differentialgetriebe führenden Kardanwelle verbunden ist. Dadurch ist die Antriebsstrangeinheit direkt in einem Allradantrieb des Hybridfahrzeuges integriert.

In anderen Worten ausgedrückt, ist erfindungsgemäß ein Hybridgetriebe (Getriebeeinheit) zur Verfügung gestellt, das ein (Automatik-) Getriebe und eine elektrische Maschine, die axial versetzt zu dieser ist und an einem Ausgang des Getriebes angeordnet ist, aufweist. Die elektrische Maschine kann unter Verwendung einer Trennkupplung an einen / von einem Antriebsstrang angekoppelt / entkoppelt werden. Zusätzlich ist optional eine weitere (zweite) Kupplung vorsehbar, die zum Koppeln / Entkoppeln einer mit einem Differentialgetriebe verbundenen Antriebswelle (Ausgangswelle) ausgestaltet ist. Die elektrische Maschine und die zumindest eine Kupplung oder die beiden Kupplungen bilden zusammen ein Modul aus. Die Kupplung oder die Kupplungen sind über Hebel (Hebelaktoren) betätigt. Eine Betätigungskraft wird über einen Innenlamellenträger in eine Welle (Eingangswelle) geleitet und in einer Wand (Gehäusewand) eines Gehäuses an einem Stützlager abgestützt.

Die Erfindung wird nun nachfolgend anhand von Figuren näher erläutert, in welchem Zusammenhang auch unterschiedliche Ausführungsbeispiele dargestellt sind.

Es zeigen:
- Fig. 1: eine Längsschnittdarstellung einer erfindungsgemäßen, in einer Getriebeeinheit integrierten Antriebsstrangeinheit nach einem ersten Ausführungsbeispiel, wobei die Antriebsstrangeinheit zwei verschiedene Kupplungen aufweist und der Übersichtlichkeit halber auf die Darstellung einer elektrischen Maschine verzichtet ist,
- Fig. 2: eine Längsschnittdarstellung einer erfindungsgemäßen für einen Frontantrieb eines Kraftfahrzeuges ausgebildeten Antriebsstrangeinheit nach einem zweiten Ausführungsbeispiel, wobei die Antriebsstrangeinheit nur mit einer einzigen Trennkupplung versehen ist,
- Fig. 3: eine detaillierte Längsschnittdarstellung der Antriebsstrangeinheit nach Fig. 1 im Bereich einer zusätzlich zu der Trennkupplung vorgesehenen, selbstverstärkend ausgeführten, weiteren Kupplung,
- Fig. 4: eine schematische Darstellung eines Umfangsbereiches der weiteren Kupplung nach Fig. 3, in welchem Bereich eine Blattfedereinheit zu erkennen ist, die einen bestimmten Anstellwinkel im geschlossenen Zustand der weiteren Kupplung aufweist,
- Fig. 5: ein Diagramm zur Veranschaulichung eines Verhältnisses zwischen einem Verstärkungsfaktor und dem Anstellwinkel der Blattfedern der Blattfedereinheit (Blattfederwinkel) der weiteren Kupplung nach Fig. 3,
- Fig. 6: eine schematische Ansicht eines in einem eines Kraftfahrzeug eingesetzten Antriebsstrang, in dem die Antriebsstrangeinheit nach Fig. 1 eingesetzt ist,
- Fig. 7: eine schematische Darstellung eines zur Ansteuerung der Trennkupplung einsetzbaren Steuerungssystems,
- Fig. 8: eine schematische Darstellung eines zur Ansteuerung der beiden Kupplungen der Antriebsstrangeinheit nach Fig. 1 einsetzbaren Steuerungssystems,
- Fig. 9: eine perspektivische Längsschnittdarstellung einer erfindungsgemäßen Antriebsstrangeinheit nach einem weiteren dritten Ausführungsbeispiel in einem stehenden Zustand, wobei die Antriebsstrangeinheit nass laufend umgesetzt ist und eine Kühlmittelfördereinrichtung aufweist,
- Fig. 10: eine perspektivische Längsschnittdarstellung der Antriebsstrangeinheit nach Fig. 9, wobei die Eingangswelle nun mit einer bestimmten Drehzahl bewegt wird, sodass sich bereits eine bestimmte Menge an Kühlmittel in dem rotierenden Bereich der Antriebsstrangeinheit befindet,
- Fig. 11: eine perspektivische Längsschnittdarstellung der Antriebsstrangeinheit nach Fig. 9, wobei nun eine Platte zum Umleiten des Hydraulikmittels leicht geöffnet ist, sodass ein gegenüber der Fig. 10 erhöhter Anteil Kühlmittel in dem rotierenden Teil der Antriebsstrangeinheit aufgebaut ist,
- Fig. 12: eine perspektivische Längsschnittdarstellung der Antriebsstrangeinheit nach Fig. 9 bei einer vollständig geöffneten Klappe, sodass gegenüber Fig. 11 nochmals weiteres Hydraulikmittel in den rotierenden Teil der Antriebsstrangeinheit hineinbefördert ist,
- Fig. 13: eine perspektivische Ansicht einer in Längsrichtung geschnittenen, in der Kühlmittelfördereinrichtung der Fign. 9 bis 12 eingesetzten Strahlpumpe, wobei das Hydraulikmittel einen Mindestpegel aufweist,
- Fig. 14: eine perspektivische Ansicht des in Längsrichtung geschnittenen Bereiches der Strahlpumpe der Fig. 13, wobei nun ein maximaler Pegelstand zur Beförderung des Hydraulikmittels erreicht ist,
- Fig. 15: eine Längsschnittdarstellung einer erfindungsgemäßen Antriebsstrangeinheit nach einem vierten Ausführungsbeispiel, wobei ebenfalls eine Kühlmittelfördereinrichtung vorgesehen ist und ein seitens der Trennkupplung aufgebauter Hydraulikmittelstrom eingezeichnet ist,
- Fig. 16: eine Längsschnittdarstellung der Antriebsstrangeinheit nach Fig. 15, wobei nun ein seitens der weiteren Kupplung im Betrieb stattfindender Hydraulikmittelstrom eingezeichnet ist, sowie
- Fig. 17: eine schematische Ansicht zur Veranschaulichung eines Montageverfahrens der Antriebsstrangeinheit nach Fig. 1.

Die Figuren sind lediglich schematischer Natur und dienen ausschließlich dem Verständnis der Erfindung. Die gleichen Elemente sind mit denselben Bezugszeichen versehen. Auch können die unterschiedlichen Merkmale der verschiedenen Ausführungsbeispiele frei miteinander kombiniert werden.

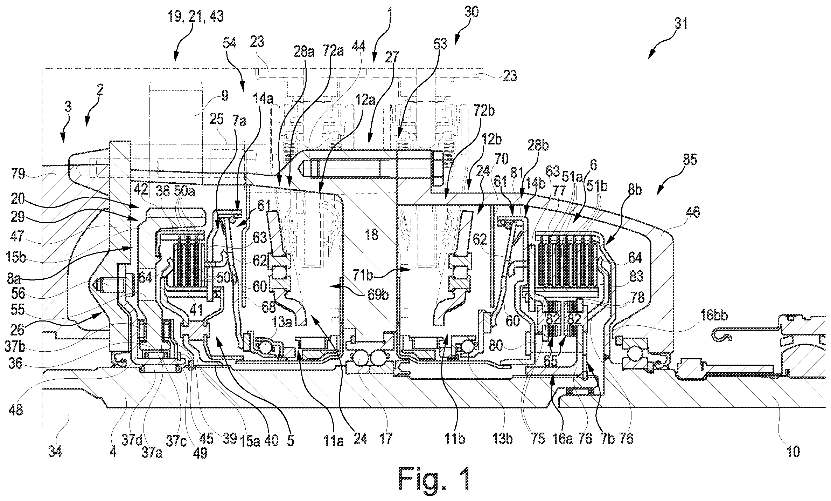

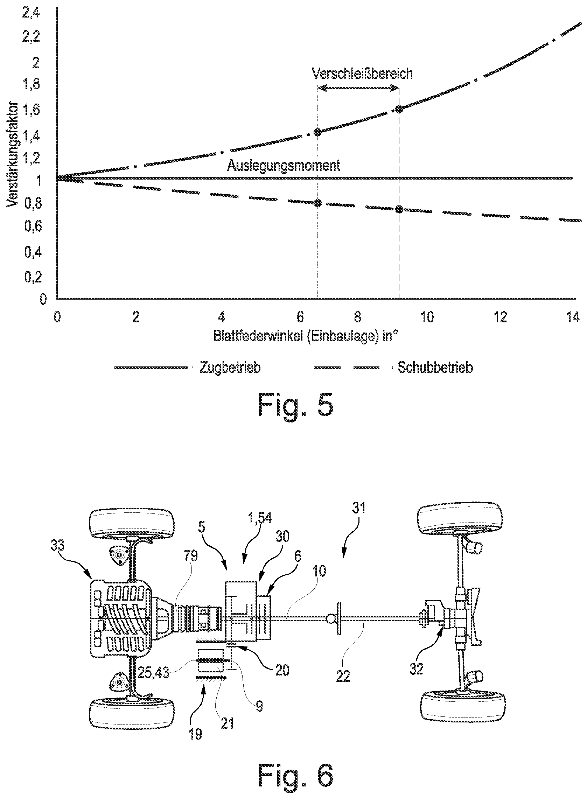

In Fig. 1 ist eine nach einem ersten Ausführungsbeispiel aufgebaute erfindungsgemäße Antriebsstrangeinheit 54 veranschaulicht. Die Antriebsstrangeinheit 54 ist bereits mit einem Getriebe 3, das in Fig. 1 lediglich hinsichtlich seiner Position angedeutet ist und in Fig. 6 weiter dargestellt ist wirkverbunden. Die Antriebsstrangeinheit 54 bildet mit diesem Getriebe 3 eine Getriebeeinheit 30 aus. Das Getriebe 3 ist als ein Automatikgetriebe umgesetzt. Ein Ausgang 2 (in Form einer Getriebeausgangswelle) des Getriebes 3 ist drehfest mit einer Eingangswelle 4 der Antriebsstrangeinheit 54 verbunden. Vorzugsweise ist der Ausgang 2 über eine Verzahnung mit der Eingangswelle 4 drehfest verbunden. Die Getriebeeinheit 30 ist bevorzugt in einem Antriebsstrang 31 eines hybriden Allradkraftfahrzeuges eingesetzt, wie in Fig. 6 zu erkennen. Das Getriebe 3 ist eingangsseitig auf typische Weise mit einem Verbrennungsmotor 33 wirkverbunden. Die Antriebsstrangeinheit 54 ist zwischen dem Getriebe 3 und einer Kardanwelle 22, die weiter mit einem Differentialgetriebe 32 an einer Hinterachse des Kraftfahrzeuges verbunden ist, eingesetzt. Die Kardanwelle 22 ist mit einer Ausgangswelle 10 der Antriebsstrangeinheit 54 drehfest verbunden. Die Antriebsstrangeinheit 54 weist eine Kupplungseinrichtung 1 mit zwei Kupplungen 5, 6 und eine hinsichtlich ihrer Position prinzipiell angedeutete elektrische Maschine 19 auf.

Zurückkommend auf Fig. 1 ist auch zu erkennen, dass die Antriebsstrangeinheit 54 ein Gehäuse 27 aufweist, das im Wesentlichen zwei durch eine Gehäusewand 18 / Zwischenwand voneinander getrennte Gehäusebereiche 28a, 28b ausbildet. In einem ersten Gehäusebereich 28a des Gehäuses 27 ist radial außerhalb der zentral angeordneten Eingangswelle 4, deren Drehachse / Längsachse mit dem Bezugszeichen 34 versehen ist, eine erste Kupplung 5, die nachfolgend als Trennkupplung 5 bezeichnet ist, untergebracht. Die Trennkupplung 5 ist als eine Reiblamellenkupplung realisiert. Die Eingangswelle 4 ist über ein hier als Doppelkugellager / doppelreihiges Rillenkugellager ausgebildetes Stützlager 17 an einer radialen Innenseite der Gehäusewandwand 18 abgestützt. Die Trennkupplung 5 ist mit ihrem zweiten Kupplungsbestandteil 8a mit einem Rotor 21 der elektrischen Maschine 19 rotatorisch gekoppelt. Der zweite Kupplungsbestandteil 8a weist mehrere zweite Reiblamellen 50b auf, die auf typische Weise für die Ausbildung als Reiblamellenkupplung wahlweise mit mehreren ersten Reiblamellen 50a eines ersten Kupplungsbestandteils 7a der Trennkupplung 5 drehfest verbunden sind (geschlossene Stellung) oder von diesen rotatorisch entkoppelt sind (geöffnete Stellung). Die ersten und zweiten Reiblamellen 50a, 50b sind in axialer Richtung abwechselnd zueinander angeordnet. Die Trennkupplung 5 wird durch eine erste Betätigungseinheit 11a zwischen ihrer geschlossenen Stellung und ihrer geöffneten Stellung hin und her verbracht. Unter jeder der Reiblamellen 50a, 50b ist eine solche Einheit zu verstehen, die auf einem Trägerelement entweder einseitig oder zweiseitig einen Reibbelag besitzt.

Die erste Betätigungseinheit 11a ist, wie nachfolgend näher erläutert, mit einem (ersten) Axialkraftaktor in Form eines ersten Hebelaktors 12a ausgestattet, der verstellend auf ein erstes Betätigungslager 13a einwirkt. Das erste Betätigungslager 13a dient wiederum zur Verschiebung der ersten und zweiten Reiblamellen 50a, 50b. Der erste Hebelaktor 12a, wie auch der nachfolgend beschriebene zweite Hebelaktor 12b sind jeweils auf bekannte Weise umgesetzt. In diesem Zusammenhang wird auf das Ausrücksystem der DE 10 2004 009 832 A1 exemplarisch verwiesen, dessen Aufbau und Funktion für den jeweiligen Hebelaktor 12a, 12b als hierin integriert gilt. Demnach weist der jeweilige Hebelaktor 12a, 12b stets einen Elektromotor 23 auf, der beispielsweise über einen Spindeltrieb verstellend mit einem Rampenorgan zusammenwirkt. Das Rampenorgan ist mittels eines entlang seiner radialen Rampenkontur verfahrbaren Drehpunktes, der durch den Spindeltrieb einstellbar ist, axial verstellbar. Durch die axiale Koppelung des Rampenorgans mit dem Betätigungslager 13a, 13b verschiebt sich das jeweilige Betätigungslager 13a, 13b und die entsprechend Kupplung wird betätigt. In einer weiteren erfindungsgemäßen Ausführung ist der jeweilige Axialkraftaktor alternativ als Scharnieraktor umgesetzt. In diesem Zusammenhang wird auf die DE 10 2012 211 487 A1 verwiesen, die einen solchen Scharnieraktor beschreibt, wobei dessen Ausführung für den jeweiligen Axialkraftaktor als hierin integriert gilt. Demnach ist der erste Axialkraftaktor in der weiteren Ausführung als erster Scharnieraktor umgesetzt und/oder der zweite Axialkraftaktor als zweiter Scharnieraktor umgesetzt.

Der zweite Kupplungsbestandteil 8a weist des Weiteren einen (zweiten) Träger 15b auf, der relativ zu dem Gehäuse 27, nämlich zu einer mit dem Gehäuse 27 verbundenen sowie das Gehäuse 27 mit ausbildenden Lagerflanscheinheit 26, die nachfolgend schlicht als Lagerflansch 26 bezeichnet ist, verdrehbar gelagert ist. Der zweite Träger 15b weist dazu an seiner radialen Innenseite einen Lagersockel 36 auf, der über mehrere Wälzlager 37a, 37b, 37c in axialer Richtung sowie in radialer Richtung an dem Lagerflansch 26 abgestützt ist. Von diesem Lagersockel 36 aus erstreckt sich der zweite Träger 15b in Bezug auf die Drehachse 34 im Wesentlichen scheibenförmig radial nach außen. An einer radialen Außenseite bildet der zweite Träger 15b eine Verzahnung 42 (Außenverzahnung) aus, die zur drehfesten Koppelung mit dem Rotor 21 dient, wie nachfolgend näher beschrieben.

Radial innerhalb der Verzahnung 42 ist ein in axialer Richtung vorspringender (erster) Aufnahmebereich 38 an dem zweiten Träger 15b vorgesehen, welcher erste Aufnahmebereich 38 unmittelbar zur drehfesten Aufnahme der zweiten Reiblamellen 50b dient. Der Aufnahmebereich 38 ist ebenfalls ein Bestandteil des zweiten Kupplungsbestandteils 8a. Zudem sind die zweiten Reiblamellen 50b in axialer Richtung relativ zueinander verschiebbar auf dem ersten Aufnahmebereich 38 aufgenommen. Die zweiten Reiblamellen 50b sind zu einer radialen Innenseite des ersten Aufnahmebereiches 38 hin angeordnet, sodass der zweite Träger 15b einen Außenlamellenträger der Trennkupplung 5 bildet. Der zweite Träger 15b erstreckt sich derart, dass die ersten Reiblamellen 50a in radialer Richtung außerhalb des Lagersockels 36 sowie radial innerhalb der Verzahnung 42 angeordnet sind.

Der erste Kupplungsbestandteil 7a ist dauerhaft drehfest mit der Eingangswelle 4 gekoppelt. Hierfür weist der erste Kupplungsbestandteil 7a einen (ersten) Träger 15a auf. Der erste Träger 15a ist über eine Kerbverzahnung 40 drehfest mit der Eingangswelle 4 verbunden. Der erste Träger 15a weist einen sich in axialer Richtung erstreckenden ersten Hülsenbereich 41 auf, zu dessen radialer Außenseite hin die ersten Reiblamellen 50a drehfest sowie in axialer Richtung relativ zueinander verschieblich angeordnet sind. Der erste Träger 15a bildet somit einen Innenlamellenträger der Trennkupplung 5.

In dieser Ausführung ist die elektrische Maschine 19 mit ihrem Rotor 21, der wiederum um eine Rotordrehachse 25 verdrehbar ist, radial außerhalb der Eingangswelle 4 angeordnet. Eine Rotorwelle 43 (Fig. 6) des Rotors 21 ist radial versetzt, hier im Wesentlichen parallel, zu der Drehachse 34 angeordnet. Zur Koppelung des Rotors 21 mit dem zweiten Träger 15b ist eine Zahnradstufe 20 vorgesehen. Ein in Fig. 1 gestrichelt dargestelltes Zahnrad 9 befindet sich permanent mit der Verzahnung 42 in Zahneingriff. Das Zahnrad 9 ist direkt mit der Rotorwelle 43 (Fig. 6) drehfest verbunden und somit koaxial zum Rotor 21 angeordnet. Befindet sich die Trennkupplung 5 in einer geöffneten Stellung, ist es möglich, die elektrische Maschine 19 / den Rotor 21 still stehen zu lassen. In einer geschlossenen Stellung der Trennkupplung 5 ist auf typische Weise ein Betrieb der elektrischen Maschine 19 ermöglicht. In weiteren Ausführungen ist statt der Zahnradstufe 20 auch eine Koppelung des Rotors 21 über ein Endloszugmittel, wie Riemen oder Kette, mit der dann entsprechend an das Endloszugmittel angepassten Verzahnung 42 vorgesehen.

Hinsichtlich des Lagerflansches 26, der den zweiten Träger 15b lagert, ist weiterhin zu erkennen, dass dieser im Wesentlichen zweiteilig realisiert ist, wobei auch eine einteilige Ausbildung gemäß weiterer erfindungsgemäßer Ausführungen möglich ist. Ein scheibenförmiger Grundkörper 47 des Lagerflansches 26 ist weiter mit einem die Gehäusewand 18 ausformenden Hauptgehäusebestandteil 44 des Gehäuses 27 verbunden. Der Grundkörper 47 besteht in dieser Ausführung, wie auch der Hauptgehäusebestandteil 44, aus einem Aluminiumwerkstoff (einem Aluminiumgusswerkstoff) und bildet an sich eine Kröpfung aus.

Mit dem Grundkörper 47 ist ein Stützelement 48 des Lagerflansches 26 verbunden. Das Stützelement 48 ist über mehrere in Umfangsrichtung verteilt angeordnete Befestigungsmittel 56, hier Schrauben, an dem Grundkörper 47 (im Bereich seiner Kröpfung) befestigt. Zur leichteren Anbringung der Befestigungsmittel 56 sind in dem zweiten Träger 15b auf radialer Höhe der Befestigungsmittel 56 axiale Durchgangslöcher 55 eingebracht. Jedes dieser Durchgangslöcher 55 ist in einer Ausgangsstellung / Montagestellung axial fluchtend zu einem Befestigungsmittel 56 ausgerichtet. Das Stützelement 48 ist vorzugsweise aus einem umgeformten Stahlwerkstoff hergestellt. Das Stützelement 48 weist einen eine Kröpfung ausbildenden Lagerbereich 49 auf.

Der Lagerbereich 49 stellt einen axialen Vorsprung dar, an dem radial von außen der zweite Träger 15b abgestützt ist. Der zweite Träger 15b ist über ein als Radiallager dienendes erstes Wälzlager 37a auf dem Lagerbereich 49 gelagert. Zu einer dem Grundkörper 47 in axialer Richtung zugewandten Seite des zweiten Trägers 15b ist ein zweites Wälzlager 37b, unter Ausbildung eines Axiallagers, zwischen dem Stützelement 48 und dem zweiten Träger 15b angeordnet. Ein drittes Wälzlager 37c, das ebenfalls ein Axiallager bildet, ist auf einer dem Grundkörper 47 axial abgewandten Seite des zweiten Trägers 15b angeordnet. Dieses dritte Wälzlager 37c ist in axialer Richtung zwischen dem zweiten Träger 15b und einer axial fest an dem Stützelement 48 aufgenommenen Ausgleichsscheibe 39 in Form einer Shimmscheibe angeordnet. Die Ausgleichsscheibe 39 ist mittels eines Sicherungsringes 45 direkt an dem Lagerbereich 49 festgelegt. Die Eingangswelle 4 ist radial von innen an dem Lagerbereich 49 über ein viertes Wälzlager 37d relativ zu dem Gehäuse 27 gelagert. In Bezug auf die ersten bis vierten Wälzlager 37a bis 37d sei darauf hingewiesen, dass diese zwar in dieser Ausführung als Nadellager realisiert sind, in weiter bevorzugt Ausführungen jedoch auch auf andere Weise, bspw. als Kugellager, ausgeführt sein können.

Die Gehäusewand 18 unterteilt das Gehäuse 27 in den ersten Gehäusebereich 28a und in den zweiten Gehäusebereich 28b. Der zweite Gehäusebereich 28b ist durch einen eine Glocke ausbildenden Nebengehäusebestandteil 46, der an dem Hauptgehäusebestandteil 44 befestigt ist, begrenzt. In dem zweiten Gehäusebereich 28b ist eine weitere zweite Kupplung 6 angeordnet. Die zweite Kupplung 6 ist ebenfalls als Reibungskupplung, nämlich Reiblamellenkupplung, realisiert. Insbesondere, wie nachfolgend näher erläutert, ist diese zweite Kupplung 6 als eine selbstverstärkende Kupplung 6 umgesetzt. Ein erster Kupplungsbestandteil 7b der zweiten Kupplung 6 ist drehfest mit der Eingangswelle 4 verbunden. Ein zweiter Kupplungsbestandteil 8b der zweiten Kupplung 6 ist drehfest mit der Ausgangswelle 10 verbunden, welche Ausgangswelle 10, wie bereits beschrieben, weiter mit der Kardanwelle 22 verbunden ist.

Der erste Kupplungsbestandteil 7b der zweiten Kupplung 6 weist einen ersten Träger 16a (der zweiten Kupplung 6) sowie mehrere in axialer Richtung relativ zueinander verschiebbare, drehfest auf dem ersten Träger 16a aufgenommene erste Reiblamellen 51a (der zweiten Kupplung 6) auf. Die ersten Reiblamellen 51a wechseln sich mit zweiten Reiblamellen 51b des zweiten Kupplungsbestandteils 8b der zweiten Kupplung 6 in axialer Richtung ab. Die zweiten Reiblamellen 51b sind wiederum drehfest sowie in axialer Richtung relativ zueinander verschiebbar auf einem zweiten Träger 16b (der zweiten Kupplung 6) angeordnet. Der zweite Träger 16b ist unmittelbar mit der Ausgangswelle 10 (hier über eine Verschweißung) verbunden. Zum Verstellen der zweiten Kupplung 6 zwischen ihrer geöffneten Stellung und ihrer geschlossenen Stellung ist eine zweite Betätigungseinheit 11b in dem zweiten Gehäusebereich 28b vorgesehen.

Die zweite Betätigungseinheit 11b ist, wie nachfolgend näher erläutert, mit einem (zweiten) Axialkraftaktor in Form eines zweiten Hebelaktor 12b ausgestattet, der verstellend auf ein zweites Betätigungslager 13b einwirkt. Das zweite Betätigungslager 13b dient wiederum zur Verschiebung der ersten und zweiten Reiblamellen 51a, 51b.

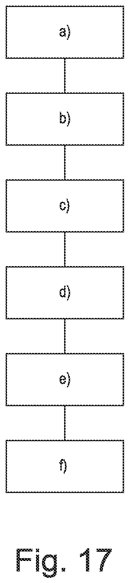

In Verbindung mit den Fign. 1 und 17 sei zudem auf ein bevorzugtes Montageverfahren der Antriebsstrangeinheit 54 bzw. der Getriebeeinheit 30 hingewiesen. In einem ersten Schritt a) wird der Lagerflansch 26 getriebegehäusefest angebracht, nämlich an diesem Getriebegehäuse 79 angeschraubt. Auch wird in diesem ersten Schritt a) die elektrische Maschine 19 getriebegehäusefest angebracht.

In einem weiteren zweiten Schritt b) wird ein erstes Modul 29 bereitgestellt. Dabei bildet der Lagerflansch 26 zusammen mit dem auf ihm gelagerten zweiten Träger 15b der Trennkupplung 5 das gemeinsame erste Modul 29 aus. Der zweite Träger 15b wird zusammen mit den ersten bis dritten Wälzlagern 37a, 37b, 37c auf dem an dem Grundkörper 47 befestigten Stützelement 48 montiert. Zusätzlich wird in dem zweiten Schritt b) der Rotor 21 der elektrischen Maschine 19 über die Zahnradstufe 20 mit dem zweiten Träger 15b der Trennkupplung 5 verbunden. Die Zahnradstufe 20, sprich das Zahnrad 9 samt seiner Lagerung sowie die elektrische Maschine 19 sind bereits in Schritt a) vormontiert. Außerdem wird der zweite Träger 15b der Trennkupplung 5 in seinem Axialspiel mittels der Ausgleichsscheibe 39 eingestellt. Es sei darauf hingewiesen, dass gemäß einer besonders bevorzugten weiteren Ausführung zunächst das erste Modul 29 getrennt (gemäß Schritt b)) montiert wird und anschließend (gemäß Schritt a)) durch Befestigen des Lagerflansches 26 an dem Getriebegehäuse 79 angebracht wird.

In einem dritten Schritt c) wird die zentrale Eingangswelle 4 über das Stützlager 17 an der radial nach innen vorspringenden Gehäusewand 18 gelagert. Das Stützlager 17 wird folglich zwischen dem Hauptgehäusebestandteil 44 und der Eingangswelle 4 vorgespannt. Das Stützlager 17 wird somit fest zwischen dem Gehäuse 27 und der Eingangswelle 4 fixiert. In diesem dritten Schritt c) ist der Hauptgehäusebestandteil 44 noch von dem Lagerflansch 26 sowie den übrigen Bestandteilen des Gehäuses 27 beabstandet / demontiert. Auch die Eingangswelle 4 ist noch von der Trennkupplung 5 getrennt angeordnet.

In einem vierten Schritt d) wird ein zur Betätigung der Trennkupplung 5 vorgesehener erster Hebelaktor 12a (erster Axialkraftaktor) der ersten Betätigungseinheit 11a in dem Hauptgehäusebestandteil 44, nämlich in dem ersten Gehäusebereich 28a, montiert. In diesem vierten Schritt d) wird auch ein, zur Betätigung der zweiten Kupplung 6 vorgesehener, zweiter Hebelaktor 12b (zweiter Axialkraftaktor) in dem Hauptgehäusebestandteil 44, nämlich in dem zweiten Gehäusebereich 28b, montiert. Somit entsteht ein Zusammenbau, in dem der zweite Hebelaktor 12b auf einer dem ersten Hebelaktor 12a abgewandten axialen Seite der Gehäusewand 18 angebracht ist.

In einem fünften Schritt e) wird der erste Kupplungsbestandteil 7a der Trennkupplung 5 auf der Eingangswelle 4 drehfest angebracht. Somit entsteht ein zweites Modul 53.

Weiterhin wird der erste Kupplungsbestandteil 7b der zweiten Kupplung 6 drehfest mit der Eingangswelle 4 verbunden. Dies erfolgt bevorzugt ebenfalls in Schritt e). Zur Umsetzung eines dritten Moduls 85 wird zudem der mit einem Teil des zweiten Kupplungsbestandteils 8b der zweiten Kupplung 6 verbundene Nebengehäusebestandteil 46 bereitgestellt. Das dritte Modul 85 wird an dem Hauptgehäusebestandteil 44 befestigt, wobei die zweite Kupplung 6 mit ihren beiden miteinander koppelbaren Kupplungsbestandteilen 7b, 8b fertig montiert wird und der zweite Hebelaktor 12b mit dieser zweiten Kupplung 6 in Wirkverbindung gebracht wird. Mit dem zweiten Kupplungsbestandteil 8b der zweiten Kupplung 6 ist in diesem Schritt auch die Ausgangswelle 10 bereits drehfest verbunden.

In einem sechsten Schritt f) wird schließlich ein durch die Schritte c) bis e) bereitgestelltes zweites Modul 53 gesamtheitlich mit dem ersten Modul 29 verbunden, sodass der Hauptgehäusebestandteil 44 mit dem Lagerflansch 26 verbunden wird, die Trennkupplung 5 mit ihren beiden miteinander koppelbaren Kupplungsbestandteilen 7a, 8a fertig montiert wird und der erste Hebelaktor 12a mit der Trennkupplung 5 in Wirkverbindung gebracht wird. Schließlich ist die Antriebsstrangeinheit 54 an dem Getriebegehäuse 79 montiert. Die einzelnen Verfahrensschritte a) bis f) werden bevorzugt gemäß ihrer alphabetischen Abfolge zeitlich nacheinander durchgeführt. Anschließend an den Schritt f) wird dann bevorzugt das dritte Modul 85 an dem zweiten Modul 53 angebracht.

In diesem Zusammenhang sei darauf hingewiesen, dass die verschiedenen Module 29, 53, 85 unabhängig voneinander in beliebiger Reihenfolge montierbar sind. Auch ist es möglich lediglich zwei der drei Module 29, 53, 85 bereitzustellen und miteinander zu verbinden.

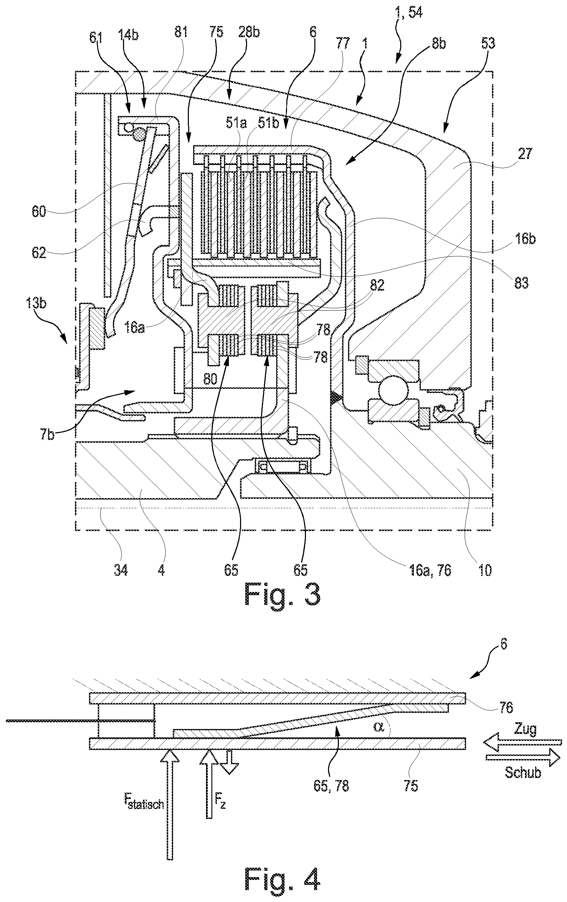

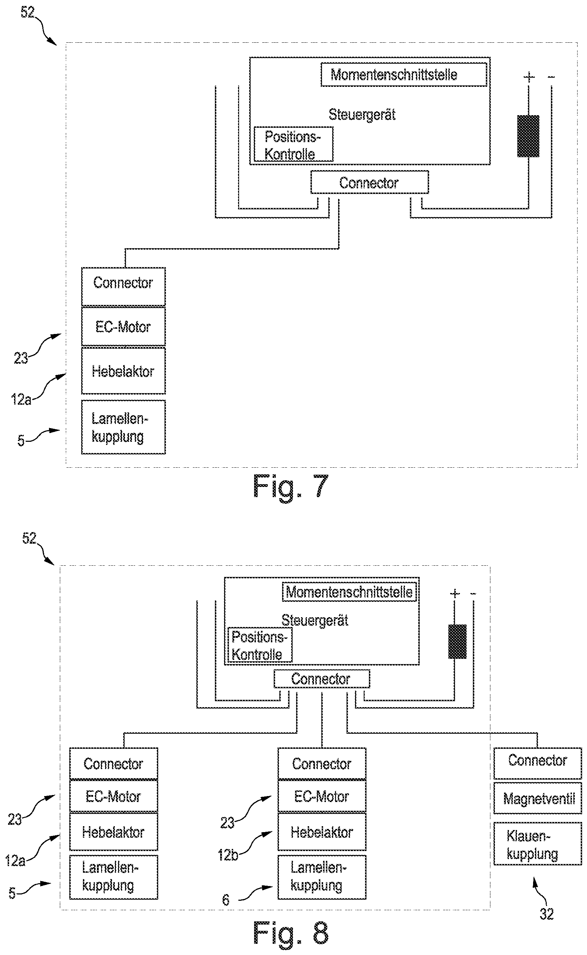

Mit den Fign. 3 bis 5 ist weiterhin der nachfolgend ausführlich beschriebene selbstverstärkende Aufbau der zweiten Kupplung 6 beschrieben. In den Fign. 7 und 8 sind zudem prinzipiell umsetzbare Steuerungssysteme 52 veranschaulicht, die zum Ansteuern der Antriebsstrangeinheit 54 ausgebildet sind. In Fig. 7 ist das Steuerungssystem 52 lediglich seitens eines mit der Trennkupplung 5 zusammenwirkenden Bereiches dargestellt. In Fig. 8 ist das gesamte Steuerungssystem 52 auch mit einem Bereich dargestellt, der die zweite Kupplung 6 und das als Hinterachsgetriebe ausgebildete Differentialgetriebe 32 ansteuert.

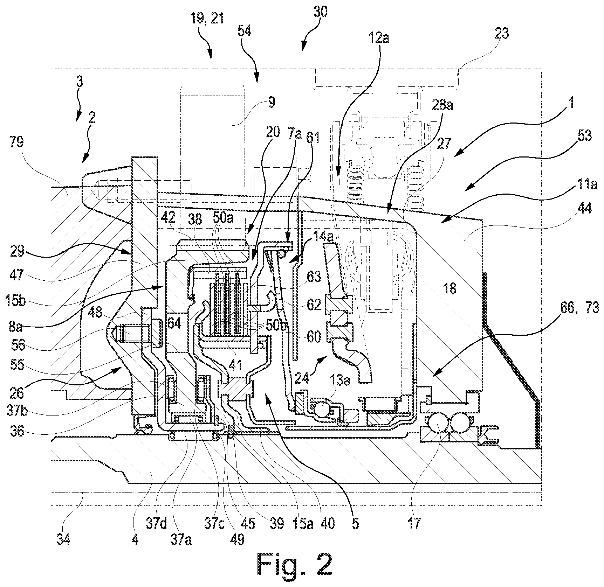

In Verbindung mit Fig. 2 ist ein weiteres zweites Ausführungsbeispiel der Antriebsstrangeinheit 54 veranschaulicht, wobei dieses in Aufbau und Funktion dem ersten Ausführungsbeispiel entspricht. Die Antriebsstrangeinheit 54 dieses zweiten Ausführungsbeispiels ist hinsichtlich des ersten Gehäusebereiches 28a und der seitens dieses ersten Gehäusebereiches 28a aufgenommenen Komponenten wie das erste Ausführungsbeispiel realisiert. In diesem Zusammenhang soll insbesondere darauf hingewiesen werden, dass prinzipiell auch auf die weitere optionale zweite Kupplung 6 verzichtet ist, um eine hybride Getriebeeinheit 30 vorzugsweise rein für einen Frontantrieb zur Verfügung zu stellen. Die Antriebsstrangeinheit 54 weist daher in dieser Ausführung lediglich die Funktion der An- und Abkoppelung der elektrischen Maschine 19 von Vorderrädern des Kraftfahrzeuges auf. Die Montage erfolgt gemäß dem zuvor beschriebenen Verfahren, wobei auf die die zweite Kupplung 6 betreffenden Teilschritte weggelassen sind.

Hinsichtlich des gegenständlichen erfindungsgemäßen Aspektes sei nochmals auf die Fig. 1 zurückgekommen. Wie in Fig. 1 zu erkennen, weist sowohl die erste Kupplung 5 als auch die zweite Kupplung 6 der Kupplungseinrichtung 1 eine ihr zugeordnete Betätigungseinheit 11a, 11b auf. Die auf die erste Kupplung 5 einwirkende erste Betätigungseinheit 11a ist zusammen mit der ersten Kupplung 5 in dem ersten Gehäusebereich 28a untergebracht. Die erste Betätigungseinheit 11a sowie die erste Kupplung 5 sind auf einer ersten axialen Seite der zentralen Gehäusewand 18 angeordnet. Auf einer dieser ersten axialen Seite abgewandten zweiten axialen Seite der Gehäusewand 18 sind die zweite Kupplung 6 sowie die auf sie einwirkende zweite Betätigungseinheit 11b angeordnet. Es sei dabei darauf hingewiesen, dass die beiden Betätigungseinheiten 11a, 11b prinzipiell spiegelverkehrt zu der Gehäusewand 18 angeordnet sind, jedoch im Wesentlichen gleich aufgebaut sind sowie auf gleiche Weise funktionieren. Die Funktion der beiden Betätigungseinheiten 11a, 11b wird somit nachfolgend exemplarisch anhand der ersten Betätigungseinheit 11a beschrieben, wobei diese Funktion auch für die zweite Betätigungseinheit 11b selbstverständlich zutrifft.

Die erste Betätigungseinheit 11a weist den in Fig. 1 teilweise dargestellten ersten Hebelaktor 12a auf. Wie bereits erwähnt, ist der erste Hebelaktor 12a gemäß dem Ausrücksystem der DE 10 2004 009 832 A1 aufgebaut. Weiterhin ist zu erkennen, dass das erste Betätigungslager 13a, das hier als Kugellager realisiert ist, wirkt weiter auf einen ersten Betätigungskrafteinleitmechanismus 14a einwirkt, der weiter an dem zweiten Träger 15b der ersten Kupplung 5 aufgenommen ist und verstellend auf die Reiblamellen 50a, 50b einwirkt. Damit lässt sich die Gesamtheit an Reiblamellen 50a, 50b in axialer Richtung mit einer Betätigungskraft / Axialkraft beaufschlagen und die erste Kupplung 5 in ihre geschlossene Stellung verbringen.

Zur Abstützung der Betätigungskraft ist der erste Betätigungskrafteinleitmechanismus 14a derart unmittelbar an dem zweiten Träger 15b, der weiter mit der Eingangswelle 4 direkt verbunden ist, aufgenommen, dass die Betätigungskraft über den zweiten Träger 15b unmittelbar in die Eingangswelle 4 eingeleitet wird und von dort aus über das zentrale Stützlager 17 weiter an die Gehäusewand 18 geleitet wird / relativ zu dieser abgestützt ist.

Der erste Betätigungskrafteinleitmechanismus 14a weist ein Hebelelement 60 auf, das mit dem Bezugszeichen 33 gekennzeichnet ist. Das Hebelelement 60 ist bspw. als Tellerfeder realisiert. Das Hebelelement 60 ist an einer Schwenklagerung 61, die fest mit dem zweiten Träger 15b verbunden ist, schwenkbar aufgenommen. Radial innerhalb der Schwenklagerung 61 wirkt das Hebelelement 60 verstellend auf ein einen Drucktopf ausbildendes Stellglied 62 ein, das wiederum unmittelbar auf die Gesamtheit der Reiblamellen 50a, 50b verschiebend einwirkt. Alternativ kann der erste Betätigungskrafteinleitmechanismus 14a auch nur mit dem Stellglied 62 umgesetzt sein und folglich das erste Betätigungslager 13a direkt auf das Stellglied 62 verstellend einwirken. Auf einer dem Stellglied 62 axial abgewandten Seite der Gesamtheit aus Reiblamellen 50a, 50b ist ein Gegenstützbereich 64 angeordnet, welcher Gegenstützbereich 64 ebenfalls unmittelbar mit dem zweiten Träger 15b verbunden ist, um einen geschlossenen Kraftverlauf in dem zweiten Träger 15b zu erzielen und die Betätigungskraft möglichst vollständig über den zweiten Träger 15b in die Eingangswelle 4 einzuleiten.

Wie bereits erwähnt ist die zweite Betätigungseinheit 11b gemäß der ersten Betätigungseinheit 11a aufgebaut sowie funktionierend. Demnach dient die zweite Betätigungseinheit 11b wiederum zum Kraft beaufschlagen der Gesamtheit an Reiblamellen 51a, 51b der zweiten Kupplung 6 mittels eines zweiten Betätigungskrafteinleitmechanismus 14b. Hierbei ist zu erkennen, dass aufgrund der selbstverstärkenden Ausbildung der zweiten Kupplung 6 ein den zweiten Betätigungskrafteinleitmechanismus 14b aufnehmendes erstes Trägerteil 75 des ersten Trägers 16a der zweiten Kupplung 6 mit einem, unmittelbar an der Eingangswelle 4 angebrachten, zweiten Trägerteil 76 über mehrere Blattfedereinheiten 65 bestehend aus einer Vielzahl an Blattfedern 78 gekoppelt ist. Der Gegenstützbereich 64 der zweiten Kupplung 6 ist unmittelbar mit dem zweiten Trägerteil 76 gekoppelt.

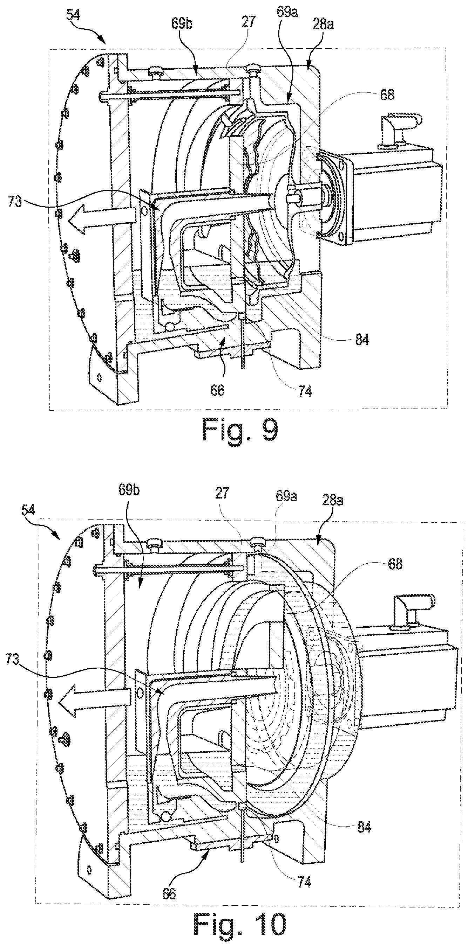

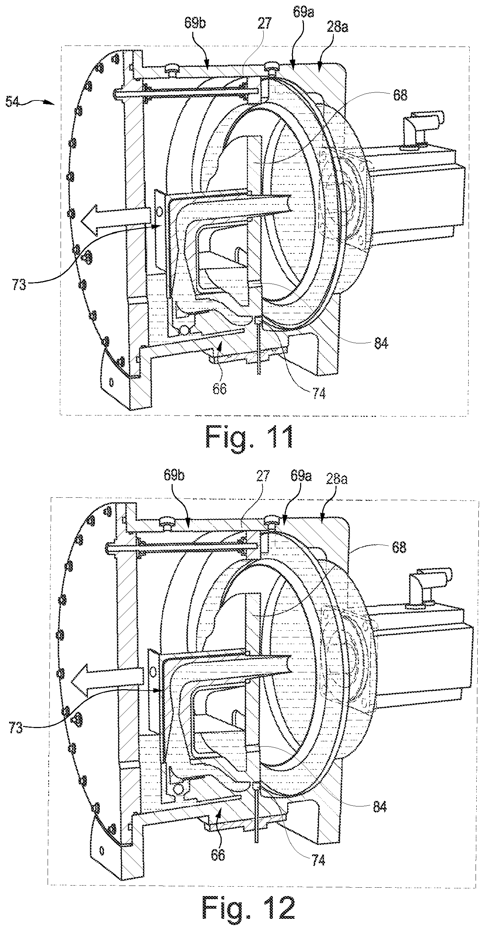

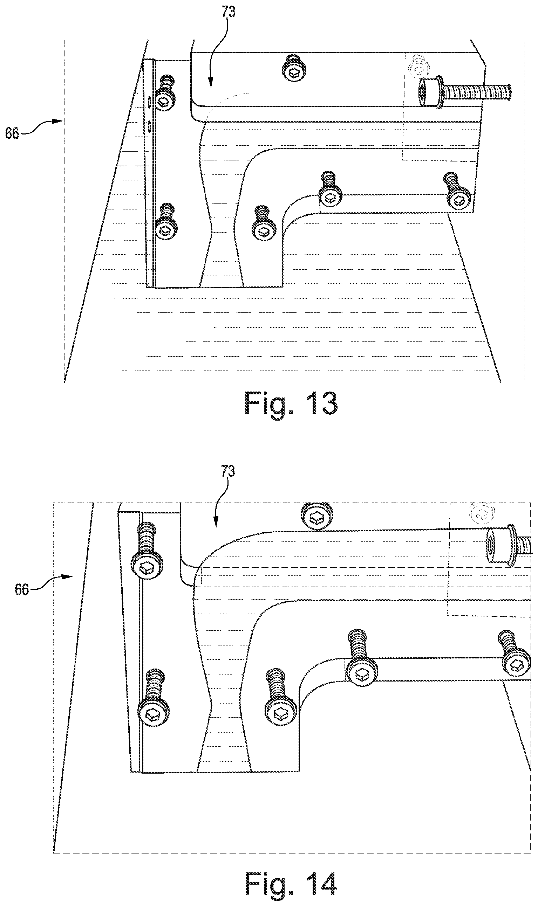

Ein weiterer erfindungsgemäßer Aspekt ist mit den Fign. 9 bis 16 veranschaulicht. Mit den Fign. 9 bis 16 sind zwei weitere Ausführungsbeispiele der Antriebsstrangeinheit 54 veranschaulicht, welche Ausführungsbeispiele jedoch prinzipiell gemäß dem ersten bzw. zweiten Ausführungsbeispiel aufgebaut sind sowie funktionieren. Der Kürze wegen werden daher nachfolgend lediglich die Unterschiede dieser Ausführungsbeispiele erläutert.

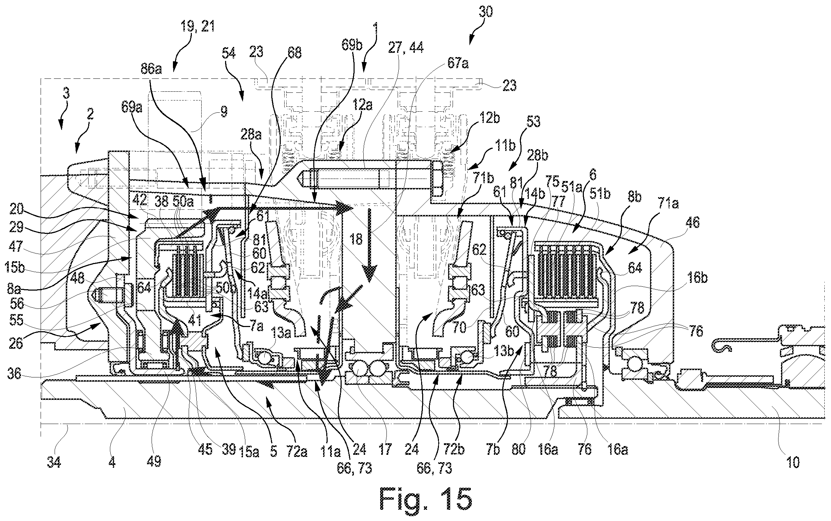

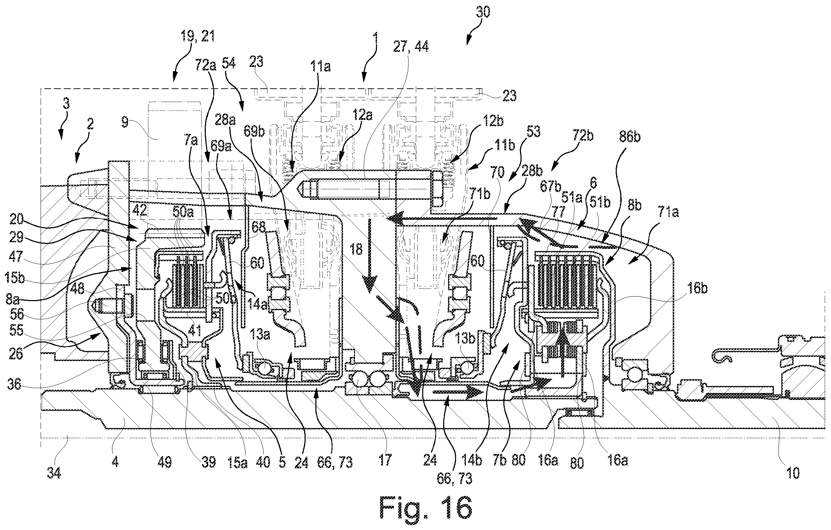

Die Antriebsstrangeinheit 54 nach den Fign. 9 bis 14 ist im Wesentlichen gemäß dem zweiten Ausführungsbeispiel der Fig. 2 aufgebaut. Die Antriebsstrangeinheit 54 des dritten Ausführungsbeispiels weist nun zusätzlich eine Kühlmittelfördereinrichtung 66 auf, die in ihrem prinzipiellen Aufbau veranschaulicht ist. Die Kühlmittelfördereinrichtung 66 ist in dem vierten Ausführungsbeispiel der Fign. 15 und 16 für jede der beiden Kupplungen 5, 6 einmal vorgesehen, wobei die Kühlmittelfördereinrichtungen 66 sich in ihrer Funktion gleichen. Die Funktion und der Aufbau der Kühlmittelfördereinrichtungen 66 der Fign. 15 und 16 ist somit nachfolgend exemplarisch an der Kühlmittelfördereinrichtung 66 der Fign. 9 bis 14 erläutert.

Die Kühlmittelfördereinrichtung 66 weist eine in den Fign. 9 bis 14 gut zu erkennende Strahlpumpe 73 auf, die in einem Hydraulikmittelsumpf, der sich in Einbaulage in einer unteren Hälfte des Gehäuses 27 befindet, zu einem Teil angeordnet ist. Die Kühlmittelfördereinrichtung 66 ist gesamtheitlich so ausgebildet, dass sie mittels der Strahlpumpe 73 bei rotierender Eingangswelle 4 in dem ersten Gehäusebereich 28a einen ersten Kühlmittelkreislauf 67a erzeugt bzw. unterstützt. Der die Trennkupplung 5 sowie die erste Betätigungseinheit 11a aufnehmende, erste Gehäusebereich 28a ist im Betrieb durch den ersten Kühlmittelkreislauf 67a beaufschlagt. Ein erstes Schottelement 68 ragt dabei in den ersten Gehäusebereich 28a derart hinein, dass er diesen in zwei Teilräume 69a, 69b unterteilt. Durch das erste Schottelement 68, das als Schottblech realisiert ist, wird eine Strömung durch das in einem die erste Betätigungseinheit 11a aufnehmenden zweiten Teilraum 69b aufgenommenen Hydraulikmittel erzeugt. Der erste Kühlmittelkreislauf 67a wird dabei folglich hin zu einem ersten Teilraum 69a, der die Trennkupplung 5 aufnimmt, geleitet.

Wie des Weiteren in den Fign. 10 bis 12 zu erkennen, ist zusätzlich in der Kühlmittelfördereinrichtung 66 ein Ventilelement 74 angeordnet, das eine Strömungsregulierung des Kühlmittels in dem ersten Kühlmittelkreislauf 67a bei rotierender Eingangswelle 4 ermöglicht.

Die Kühlmittelfördereinrichtungen 66 der Fign. 15 und 16 sind gesamtheitlich so ausgebildet, dass sie sowohl in dem ersten Gehäusebereich 28a als auch in dem zweiten Gehäusebereich 28b jeweils einen Kühlmittelkreislauf 67a, 67b bei rotierender Eingangswelle 4 und somit rotierenden Kupplungen 5, 6 erzeugen. Die Strahlpumpe 73 / die Strahlpumpen 73 ist / sind zumindest teilweise an der Gehäusewand 18 integriert.

Wie ebenfalls in den Fign. 15 und 16 gezeigt, weist die jeweilige Kühlmittelfördereinrichtung 66 ein schematisch dargestelltes Ausförderelement 86a, 86b auf. Das Ausförderelement 86a, 86b ist so ausgebildet, dass es ein Umlenken des in Umfangsrichtung fließenden Kühlmittels in einen Kanal in Richtung radial innen ermöglicht. Das Ausförderelement 86a weist bspw. eine Schaufelkontur auf. Der Kanal ist bspw. durch eine Bohrung realisiert und verläuft zunächst axial zu der Gehäusewand 18 und von dort aus in radialer Richtung zur Eingangswelle 4 nach innen. Ein erstes Ausförderelement 86a ist in dem ersten Teilraum 69a untergebracht.

Auf gleiche Weise wie der erste Gehäusebereich 28a ist der zweite Gehäusebereich 28b unterteilt. Hierzu ist ein zweites (ebenfalls als Schottblech ausgebildetes) Schottelement 70 vorgesehen, das den zweiten Gehäusebereich 28b in zwei Teilräume 71a, 71b unterteilt. Gemäß Fig. 16 wird dadurch ebenfalls eine Fluidströmung von einem die zweite Betätigungseinheit 11b aufnehmenden zweiten Teilraum 71b in einen ersten Teilraum 71a ermöglicht. In dem ersten Teilraum 71a entsteht der zweite Kühlmittelkreislauf 67b, der die Reiblamellen 51a, 51b der zweiten Kupplung 6 in radialer Richtung umströmt und somit im Betrieb kühlt. Je Kupplung 5, 6 ist ein Ventilelement 74 angeordnet, das die Strömungsregulierung des Kühlmittels in den Kühlmittelkreisläufen 67a, 67b ermöglicht. Ein zweites Ausförderelement 86b ist in dem ersten Teilraum 71a untergebracht.

Dadurch werden insgesamt zwei unabhängig voneinander ansteuerbare hydraulische Teilsysteme 72a, 72b mit je einer Kühlmittelfördereinrichtung 66 oder alternativ zu einer Kühlmittelfördereinrichtung 66 zusammengefasst zur Verfügung gestellt, die jeweils den entsprechenden Kühlmittelkreislauf 67a, 67b seitens der jeweiligen Kupplung 5, 6 ansteuerbar macht. Dadurch ist eine effektive Kühlung der jeweiligen Kupplung 5, 6 ermöglicht.

Gemäß eines weiteren erfindungsgemäßen Aspekts, wie aus den Fign. 1 und 3 sowie in Verbindung mit den Fign. 4 und 5 hervorgeht, ist die als Reibungskupplung realisierte zweite Kupplung 6, die in weiteren Ausführungen auch als von der ersten Kupplung 5 und der elektrischen Maschine 19 losgelöste Einheit anzusehen ist, als selbstverstärkende Kupplung umgesetzt. Diese erfindungsgemäße zweite Kupplung 6 weist den mit dem zweiteiligen (ersten) Träger 16a ausgestatteten ersten Kupplungsbestandteil 7b auf. Das erste Trägerteil 75 dieses ersten Trägers 16a ist jener Bestandteil, der unmittelbar die mehreren ersten Reiblamellen 51a drehfest sowie axial relativ zueinander verschieblich aufnimmt. Das erste Trägerteil 75 weist dazu auf typische Weise einen hülsenförmigen (zweiten) Aufnahmebereich 83 auf, zu dessen radialer Außenseite die ersten Reiblamellen 51a angebracht sind. Das erste Trägerteil 75 weist zudem eine in axialer Richtung verschiebbare Anpressplatte 63 auf, die endseitig auf die Gesamtheit an Reiblamellen 51a, 51b der zweiten Kupplung 6 verstellend einwirkt. Die Anpressplatte 63 ist hierbei durch ein separat an dem zweiten Aufnahmebereich 83 aufgenommenes Plattenelement gebildet, kann jedoch in weiteren Ausführungen prinzipiell auch als eines der Reiblamellen 51a, 51b ausgebildet sein.

Mit dem ersten Trägerteil 75 ist das zweite Trägerteil 76 verbunden, welches zweite Trägerteil 76 jener Teil des ersten Trägers 16a ist, der unmittelbar (mittels einer Kerbverzahnung) auf der Eingangswelle 4 aufgesteckt ist. Das zweite Trägerteil 76 bildet auf einer der Anpressplatte 63 abgewandten axialen Seite der Gesamtheit an Reiblamellen 51a, 51b einen Gegenstützbereich 64 aus. Der Gegenstützbereich 64 dient zur unmittelbaren Abstützung einer die Reiblamellen 51a, 51b in einer geschlossenen Stellung der zweiten Kupplung 6 zusammendrückenden Axialkraft / Betätigungskraft. Die Betätigungskraft wird in der geschlossenen Stellung auf typische Weise über den zweiten Betätigungskrafteinleitmechanismus 14b auf die Gesamtheit der Reiblamellen 51a, 51b (über die Anpressplatte 63) eingeleitet.

Der zweite Betätigungskrafteinleitmechanismus 14b ist an dem zweiten Trägerteil 76 fixiert. Hierbei werden mehrere in Umfangsrichtung verteilt angeordnete Stehbolzen 80 verwendet, um einen aus einem separaten Blech geformten Lagerungsabschnitt 81 des zweiten Betätigungskrafteinleitmechanismus 14b fest an dem zweiten Trägerteil 76 zu fixieren bzw. als Bestandteil dieses zweiten Trägerteils 76 auszuführen. An dem Lagerungsabschnitt 81 ist das Hebelelement 60 schwenkbar gelagert. Das Hebelelement 60 ist bspw. als Tellerfeder realisiert. Auf das Hebelelement 60 wirkt ein zweites Betätigungslager 13b und auf dieses zweite Betätigungslager 13b wiederum der zweite Hebelaktor 12b der zweiten Betätigungseinheit 11b.

Entlang eines Umfangs einer gedachten um die zentrale Drehachse 34 herum verlaufenden Kreislinie sind mehrere Blattfedereinheiten 65 zwischen den beiden Trägerteilen 75, 76 verteilt vorgesehen. Jede Blattfedereinheit 65 weist mehrere, hier exemplarisch fünf, Blattfedern 78 auf, die zu einem Blattfederpaket angeordnet sind. Demnach sind die Blattfedern 78 innerhalb einer Blattfedereinheit 65 im Wesentlichen gleich ausgebildet und liegen flächig aufeinander auf. Jede Blattfeder 78 der Blattfedereinheit 65, wie in Verbindung mit Fig. 4 besonders gut zu erkennen, ist mit einem Anstellwinkel α versehen. Der Anstellwinkel α ist so gewählt, dass in der geschlossenen Stellung der zweiten Kupplung 6 ein durch die Kupplung 6 in einer Antriebsdrehrichtung (Zug) übertragenes Drehmoment die Axialkraft / Betätigungskraft der zweiten Kupplung 6 selbstverstärkend erhöht. Demnach wird zusätzlich die Kraft F_{z} aufgebracht, um die vorhandene axiale Betätigungskraft F zu erhöhen. Bei einer dieser Antriebsdrehrichtung entgegengesetzten Drehrichtung (Schub) wird hingegen die Axialkraft um einen entsprechenden Betrag herabgesenkt. Wie in Verbindung mit Fig. 5 des Weiteren zu erkennen, erhöht sich prinzipiell der Verstärkungsfaktor mit einem zunehmenden Anstellwinkel α der jeweiligen Blattfeder 78. Hierbei wird deutlich, dass der Anstellwinkel α vorzugsweise zwischen 6° und 10°, besonders bevorzugt zwischen 6,5° und 9,5° gewählt ist. Dies stellt einen besonders geeigneten Kompromiss zwischen einer Verstärkung der Axialkraft sowie einer Stabilität der Blattfedern 78 dar.

In Fig. 3 sind zwei der Blattfedereinheiten 65 im Schnitt zu erkennen, wobei eine erste Blattfedereinheit 65 seitens ihres, an dem ersten Trägerteil 75 (über einen Niet 82) fixierten, ersten Ende zu erkennen ist und eine zweite Blattfedereinheit 65 seitens ihres, an dem zweiten Trägerteil 76 (über einen Niet 82) fixierten zweiten Ende zu erkennen ist.

Der zweite Träger 16b weist weiter einen zweiten Hülsenbereich 77 auf, zu dessen radialer Innenseite die mehreren zweiten Reiblamellen 51b drehfest sowie relativ zueinander axial verschiebbar aufgenommen sind.

In anderen Worten ausgedrückt, ist erfindungsgemäß ein Automatikgetriebe 30 mit am Getriebeausgang 2 angeordneter P3-E-Maschine 19, die mittels einer Trennkupplung 5 zu- und abkoppelbar ist und optional einer Allradkupplung 6 (sog. Quattro-Kupplung) zum Zu- bzw. Abschalten der Kardanwelle 22, die zum Verteilergetriebe 32 führt, vorgesehen. Das System besteht somit aus einer Hybridisierung des Getriebes 3, die die klassischen Hybridfunktionen realisieren kann (elektrisches Fahren, Brems- und Schub-Energierückgewinnung, Segeln, Boost) bestehend aus E-Maschine 19 mit Trennkupplung 5 und aus der Allradkupplung 6, die bei Bedarf die Kardanwelle 22 schalten kann. Das System ist modular angeordnet, so dass die Hybridisierung sowohl in einem Frontantrieb als auch in einem Allradantrieb eingebaut werden kann. (mit oder ohne Quattro-Einheit), das heißt die Allradkupplung kann auch weggelassen werden bei Frontantriebsapplikationen. Aus Bauraumgründen ist die E-Maschine 19 über eine Zahnradstufe 20 achsparallel mit dem Antriebsstrang 31 und der Trennkupplung 5 verbindbar. Die Trennkupplung 5 befindet sich im Kraftfluss nach der Zahnradstufe 20 und vor dem Triebstrang 31. Dadurch werden die Zahnradverluste und Lagerschleppmomentverluste bei geöffneter Trennkupplung 5 vermieden. Ein integrierter passiver Umfördermechanismus 66 inkl. Schottelement 68, 70 verhindert das Planschen der Kupplungen 5, 6 im Ölsumpf und realisiert die Kupplungskühlung. Beide Kupplungen 5, 6 werden durch einen mechanischen Aktor 55a, 55b betätigt, die auf einer zentralen Gehäusewand 18 gelagert sind. Die Trennkupplung 5 wird somit von der Hinterseite betätigt und die Quattro-Kupplung 6 von der Vorderseite. Dies ermöglicht auf einfache Art und Weise eine Modularisierung.

Gemäß der erfindungsgemäßen Ausführung kommen hebelbetätigte Kupplungen 5, 6 zum Einsatz. Zu beachten ist, dass die Einrückkräfte über den Innenlamellenträger (erste Träger 15a, 16a) in die Welle geleitet werden und am Stützlager 17 in der Gehäusewand 18 abgestützt werden. Dadurch werden bei der Trennkupplung 5 des E-Motors 18 keine Kupplungskräfte, außer die Verschiebereibung der Lamellen, auf die Zahnradstufe 20 übertragen. An der Lagerung der Zahnradstufe 20 können dann kleinere Lager angewandt werden. Dieses Kupplungskonzept, was sowohl bei der Trennals auch bei der Allradkupplung 5, 6 zum Einsatz kommt, ermöglicht eine Vormontage folgender Aktor- und Kupplungseinheiten. P3 und Frontantrieb: Getriebegehäuse 79 kann am Stützlager 17 geschlossen werden. Die Eingangswelle 4 ist hier gekürzt umgesetzt. P3 und Allradantrieb: In der Allradglocke (Nebengehäusebestandteil 46) kann einfach die Modulausgangswelle 10 zum Kardangelenk in der Glocke 46 und in der Ausgangswelle des P3-Moduls (Eingangswelle 4) gelagert werden. Allradantrieb ohne P3-Modul: In dem Falle ist die Stützlagerwand 18 direkt mit dem Getriebegehäuse 79 verbunden.

### Bezugszeichenliste

- 1: Kupplungseinrichtung
- 2: Ausgang
- 3: Getriebe
- 4: Eingangswelle
- 5: erste Kupplung
- 6: zweite Kupplung
- 7a: erster Kupplungsbestandteil der ersten Kupplung
- 7b: erster Kupplungsbestandteil der zweiten Kupplung
- 8a: zweiter Kupplungsbestandteil der ersten Kupplung
- 8b: zweiter Kupplungsbestandteil der zweiten Kupplung
- 9: Zahnrad
- 10: Ausgangswelle
- 11a: erste Betätigungseinheit
- 11b: zweite Betätigungseinheit
- 12a: erster Hebelaktor
- 12b: zweiter Hebelaktor
- 13a: erstes Betätigungslager
- 13b: zweites Betätigungslager
- 14a: erster Betätigungskrafteinleitmechanismus
- 14b: zweiter Betätigungskrafteinleitmechanismus
- 15a: erster Träger der ersten Kupplung
- 15b: zweiter Träger der ersten Kupplung
- 16a: erster Träger der zweiten Kupplung
- 16b: zweiter Träger der zweiten Kupplung
- 17: Stützlager
- 18: Gehäusewand
- 19: elektrische Maschine
- 20: Zahnradstufe
- 21: Rotor
- 22: Kardanwelle
- 23: Elektromotor
- 24: Hebelmechanismus
- 25: Rotordrehachse
- 26: Lagerflansch
- 27: Gehäuse
- 28a: erster Gehäusebereich
- 28b: zweiter Gehäusebereich
- 29: erstes Modul
- 30: Getriebeeinheit
- 31: Antriebsstrang
- 32: Differentialgetriebe
- 33: Verbrennungsmotor
- 34: Drehachse
- 36: Lagersockel
- 37a: erstes Wälzlager
- 37b: zweites Wälzlager
- 37c: drittes Wälzlager
- 37d: viertes Wälzlager
- 38: erster Aufnahmebereich
- 39: Ausgleichsscheibe
- 40: Kerbverzahnung
- 41: erster Hülsenbereich
- 42: Verzahnung
- 43: Rotorwelle
- 44: Hauptgehäusebestandteil
- 45: Sicherungsring
- 46: Nebengehäusebestandteil
- 47: Grundkörper
- 48: Stützelement
- 49: Lagerbereich
- 50a: erste Reiblamelle der ersten Kupplung
- 50b: zweite Reiblamelle der ersten Kupplung
- 51a: erste Reiblamelle der zweiten Kupplung
- 51b: zweite Reiblamelle der zweiten Kupplung
- 52: Steuerungssystem
- 53: zweites Modul
- 54: Antriebsstrangeinheit
- 55: Durchgangsloch
- 56: Befestigungsmittel
- 60: Hebelelement
- 61: Schwenklagerung
- 62: Stellglied
- 63: Anpressplatte
- 64: Gegenstützbereich
- 65: Blattfedereinheit
- 66: Kühlmittelfördereinrichtung
- 67a: erster Kühlmittelkreislauf
- 67b: zweiter Kühlmittelkreislauf
- 68: erstes Schottelement
- 69a: erster Teilraum des ersten Gehäusebereiches
- 69b: zweiter Teilraum des ersten Gehäusebereiches
- 70: zweites Schottelement
- 71a: erster Teilraum des zweiten Gehäusebereiches
- 71b: zweiter Teilraum des zweiten Gehäusebereiches
- 72a: erstes Teilsystem
- 72b: zweites Teilsystem
- 73: Strahlpumpe
- 74: Ventilelement
- 75: erstes Trägerteil
- 76: zweites Trägerteil
- 77: zweiter Hülsenbereich
- 78: Blattfeder
- 79: Getriebegehäuse
- 80: Stehbolzen
- 81: Lagerungsabschnitt
- 82: Niet
- 83: zweiter Aufnahmebereich
- 84: Öffnung
- 85: drittes Modul
- 86a: erstes Ausförderelement
- 86b: zweites Ausförderelement

## Patentansprüche

1. Kupplungseinrichtung (1) für einen Kraftfahrzeugantriebsstrang, mit einer zum drehfesten Anbringen an einem Ausgang (2) eines Getriebes (3) vorbereiteten Eingangswelle (4), einer an der Eingangswelle (4) angeordneten Kupplung (5, 6), wobei ein erster Kupplungsbestandteil (7a, 7b) der Kupplung (5, 6) direkt mit der Eingangswelle (4) drehfest verbunden und an der Eingangswelle (4) axial abgestützt ist und ein zweiter Kupplungsbestandteil (8a, 8b) der Kupplung (5, 6) zum drehfesten Koppeln an einem weiteren Bestandteil (9, 10) ausgestaltet ist, sowie mit einer mit der Kupplung (5, 6) wirkverbundenen Betätigungseinheit (11a, 11b), wobei die Betätigungseinheit (11a, 11b) ein verschiebbares Betätigungslager (13a, 13b) aufweist, welches Betätigungslager (13a, 13b) derart mit einem mit dem ersten Kupplungsbestandteil (7a, 7b) drehfest verbundenen Betätigungskrafteinleitmechanismus (14a, 14b) zusammenwirkt, dass eine die Kupplung (5, 6) von ihrer geöffneten Stellung in ihre geschlossene Stellung verstellende Betätigungskraft über einen Träger (15a, 16a) des ersten Kupplungsbestandteils (7a, 7b) direkt in die Eingangswelle (4) eingeleitet wird und von der Eingangswelle (4) über ein Stützlager (17) an einer Gehäusewand (18) abgestützt ist, **dadurch gekennzeichnet, dass** eine erste Kupplung (5) als eine Trennkupplung zwischen der Eingangswelle (4) und einer elektrischen Maschine (19) wirkend eingesetzt ist und/oder dass eine zweite Kupplung (6) zwischen der Eingangswelle (4) und einer zur drehfesten Verbindung mit einer Kardanwelle (22) vorbereiteten Ausgangswelle (10) wirkend eingesetzt ist.

2. Kupplungseinrichtung (1) nach Anspruch 1, **dadurch gekennzeichnet, dass** zwei Kupplungen (5, 6) vorhanden sind, mit denen jeweils eine Betätigungseinheit (11a, 11b) zusammenwirkt.

3. Kupplungseinrichtung (1) nach Anspruch 1, **dadurch gekennzeichnet, dass** der zweite Kupplungsbestandteil (8a) der ersten Kupplung (5) über eine Zahnradstufe (20) oder einen Endloszugmitteltrieb mit einem Rotor (21) der elektrischen Maschine (19) gekoppelt ist.

4. Kupplungseinrichtung (1) nach Anspruch 1, **dadurch gekennzeichnet, dass** der zweite Kupplungsbestandteil (8b) der zweiten Kupplung (6) direkt mit der Ausgangswelle (10) drehfest verbunden ist.

5. Kupplungseinrichtung (1) nach einem der Ansprüche 2 bis 4, **dadurch gekennzeichnet, dass** die Betätigungseinheiten (11a, 11b) der beiden Kupplungen (5, 6) auf einander axial abgewandten Seiten der Gehäusewand (18) angeordnet sind.

6. Kupplungseinrichtung (1) nach einem der Ansprüche 1 bis 5, **dadurch gekennzeichnet, dass** die zumindest eine Betätigungseinheit (11a, 11b) derart ausgebildet und angeordnet ist, dass die Betätigungskraft über das Betätigungslager (13a, 13b), ein Verstellelement (60), ein Stellglied (62), einen Gegenstützbereich (64), den Träger (15a, 16a), die Eingangswelle (4), das Stützlager (17) und die Gehäusewand (18) abgestützt ist.

7. Getriebeeinheit (30) für ein Hybridfahrzeug, mit der Kupplungseinrichtung (1) nach einem der Ansprüche 1 bis 6 und einem mit der Eingangswelle (4) der Kupplungseinrichtung (1) verbundenen Getriebe (3).

8. Antriebsstrang (31) für ein Hybridfahrzeug, mit der Getriebeeinheit (30) nach Anspruch 7 und einem mit einer Ausgangswelle (10) der Kupplungseinrichtung (1) drehfest gekoppelten Differentialgetriebe (32).

## Claims

1. A clutch device (1) for a motor vehicle powertrain, having an input shaft (4) prepared for non-rotatable attachment to an output (2) of a transmission (3), a clutch (5, 6) arranged on the input shaft (4), wherein a first clutch component (7a, 7b) of the clutch (5, 6) is directly connected to the input shaft (4) so as to be non-rotatable and supported axially on the input shaft (4) and a second clutch component (8a, 8b) of the clutch (5, 6) is constructed on a further component (9, 10) for non-rotatable coupling, and having an actuating unit (11a, 11b) which is operatively connected to the clutch (5, 6), wherein the actuating unit (11a, 11b) has a displaceable actuating bearing (13a, 13b), which actuating bearing (13a, 13b) interacts with an actuating force introduction mechanism (14a, 14b) non-rotatably connected to the first clutch component (7a, 7b) in such a way that an actuating force moving the clutch (5, 6) from its open position to its closed position is introduced, via a carrier (15a, 16a) of the first clutch component (7a, 7b), directly into the input shaft (4) and is supported by the input shaft (4) via a support bearing (17) on a housing wall (18), **characterised in that** a first clutch (5) is used to act as a separating clutch between the input shaft (4) and an electrical machine (19) and/or that a second clutch (6) is used between the input shaft (4) and an output shaft (10) prepared to act as a non-rotatable connection with a Cardan shaft (22).

2. The clutch device (1) according to claim 1, **characterised in that** there are two clutches (5, 6), an actuating unit (11a, 11b) interacting with each of which.

3. The clutch device (1) according to claim 1, **characterised in that** the second clutch component (8a) of the first clutch (5) is coupled to a rotor (21) of the electrical machine (19) via a gear stage (20) or an endless traction drive.

4. The clutch device (1) according to claim 1, **characterised in that** the second clutch component (8b) of the second clutch (6) is connected directly to the output shaft (10) so as to be non-rotatable.

5. The clutch device (1) according to any one of claims 2 to 4, **characterised in that** the actuating units (11a, 11b) of the two clutches (5, 6) are arranged on sides of the housing wall (18) which face away from one another axially.

6. The clutch device (1) according to any one of claims 1 to 5, **characterised in that** the at least one actuating unit (11a, 11b) is designed and arranged in such a way that the actuating force is stabilised by the actuating bearing (13a, 13b), a displacing element (60), a actuator (62), a counter-support area (64), the carrier (15a, 16a), the input shaft (4), the support bearing (17), and the housing wall (18).

7. A transmission unit (30) for a hybrid vehicle, having the clutch device (1) according to any one of claims 1 to 6 and a transmission (3) connected to the input shaft (4) of the clutch device (1).

8. A powertrain (31) for a hybrid vehicle, having the transmission unit (30) according to claim 7 and a differential gear (32) non-rotatably coupled to an output shaft (10) of the clutch device (1).

## Revendications

1. Ensemble embrayage (1) pour une chaîne cinématique de véhicule automobile, comportant un arbre d'entrée (4), préparé pour être fixé de manière non rotative à une sortie (2) d'une transmission (3), un embrayage (5, 6), disposé sur l'arbre d'entrée (4), dans lequel un premier composant d'embrayage (7a, 7b) de l'embrayage (5, 6) est relié de manière non rotative directement à l'arbre d'entrée (4) et supporté de manière axiale sur l'arbre d'entrée (4) et un second composant d'embrayage (8a, 8b) de l'embrayage (5, 6) est conçu pour s'accoupler de manière non rotative à un autre composant (9, 10), ainsi que comportant une unité d'actionnement (11a, 11b) reliée de manière fonctionnelle à l'embrayage (5, 6), dans lequel l'unité d'actionnement (11a, 11b) comporte un palier d'actionnement (13a, 13b) mobile, lequel palier d'actionnement (13a, 13b) coopère avec un mécanisme d'introduction de force d'actionnement (14a, 14b) relié de manière non rotative au premier composant d'embrayage (7a, 7b) de telle sorte qu'une force d'actionnement, réglant l'embrayage (5, 6) de sa position ouverte à sa position fermée, soit introduite par l'intermédiaire d'un support (15a, 16a) du premier composant d'embrayage (7a, 7b) directement dans l'arbre d'entrée (4) et soit supportée par l'arbre d'entrée (4) par l'intermédiaire d'un palier de support (17) sur une paroi de boîtier (18), **caractérisé en ce que** le premier embrayage (5) est utilisé pour agir comme embrayage de séparation entre l'arbre d'entrée (4) et une machine (19) électrique et/ou que le second embrayage (6) est utilisé pour agir entre l'arbre d'entrée (4) et un arbre de sortie (10) préparé une liaison non rotative avec un arbre à cardan (22).

2. Ensemble embrayage (1) selon la revendication 1, **caractérisé en ce que** deux embrayages (5, 6) sont fournis, avec lesquels coopère respectivement une unité d'actionnement (11a, 11b).

3. Ensemble embrayage (1) selon la revendication 1, **caractérisé en ce que** le second composant d'embrayage (8a) du premier embrayage (5) est couplé à un rotor (21) de la machine (19) électrique par l'intermédiaire d'un étage à roue dentée (20) ou d'un mécanisme de traction sans fin.

4. Ensemble embrayage (1) selon la revendication 1, **caractérisé en ce que** le second composant d'embrayage (8b) du second embrayage (6) est relié directement à l'arbre de sortie (10) de manière non rotative.

5. Ensemble embrayage (1) selon l'une quelconque des revendications 2 à 4, **caractérisé en ce que** les unités d'actionnement (11a, 11b) des deux embrayages (5, 6) sont disposées sur des côtés de la paroi de boîtier (18) axialement opposés l'un à l'autre.

6. Ensemble embrayage (1) selon l'une quelconque des revendications 1 à 5, **caractérisé en ce que** l'au moins une unité d'actionnement (11a, 11b) est conçue et agencée de telle sorte que la force d'actionnement soit supportée par l'intermédiaire du palier d'actionnement (13a, 13b), d'un élément de réglage (60), d'un actionneur (62), d'une zone de contre-appui (64), du support (15a, 16a), de l'arbre d'entrée (4), du palier de support (17) et de la paroi de boîtier (18).

7. Ensemble transmission (30) pour un véhicule hybride, comportant l'ensemble embrayage (1) selon l'une quelconque des revendications 1 à 6 et une transmission (3) reliée à l'arbre d'entrée (4) de l'ensemble embrayage (1).

8. Chaîne cinématique (31) pour un véhicule hybride, comportant l'ensemble transmission (30) selon la revendication 7 et une transmission différentielle (32) couplée de manière non rotative à un arbre de sortie (10) de l'ensemble embrayage (1).
